# EUROPEAN PATENT APPLICATION

(11) **EP 4 822 773 A1**
(43) Date of publication of application: **14.10.2026**
(21) Application number: 25886373.7
(22) Date of filing: 16.07.2025
(51) Int. Cl.: H01M 4/36, H01M 4/525, H01M 4/505, H01M 4/131, C01G 53/50, H01M 10/054, H01M 4/02

(54) **POSITIVE ELECTRODE ACTIVE MATERIAL FOR SODIUM SECONDARY BATTERY, METHOD FOR PREPARING SAME, AND SODIUM SECONDARY BATTERY INCLUDING SAME**

(30) Priority: 31.10.2024 KR 20240153099
(71) Applicant: EcoPro BM Co., Ltd, Cheongju-si, Chungcheongbuk-do 28116 (KR)
(72) Inventor: JEON, Yejin, Cheongju-si Chungcheongbuk-do 28116 (KR); LEE, Dongwook, Cheongju-si Chungcheongbuk-do 28116 (KR); PARK, A Ram, Cheongju-si Chungcheongbuk-do 28116 (KR)
(74) Representative: Beck & Rössig European Patent Attorneys
(86) International application number: PCT/KR2025/010492
(87) International publication number: WO 2026/095265

(57) **Abstract**

One embodiment of the present invention provides a positive electrode active material for a sodium secondary battery, comprising a sodium composite transition metal oxide including at least sodium, a transition metal, a first doping metal, and a second doping metal, wherein a ratio (R_{M1}/R) of an ionic radius (R_{M1}) of the first doping metal to an ionic radius (R) of the sodium is 0.8 to 1.2, and a ratio (R_{M2}/R) of an ionic radius (R_{M2}) of the second doping metal to the ionic radius (R) of the sodium is 0.5 to 0.7.

## Description

### [Technical Field]

The present invention relates to a positive electrode active material for a sodium secondary battery, a method for preparing the same, and a sodium secondary battery including the same.

### [Background Art]

Secondary batteries have been widely used as energy storage devices in various electronic technology fields. Recently, as the demand for lithium-ion secondary batteries has rapidly increased, sodium-ion secondary batteries have attracted attention as an alternative to lithium, which is an expensive metal.

Since sodium-ion secondary batteries have an operating principle based on an intercalation/deintercalation reaction similar to that of lithium-ion secondary batteries, sodium-ion secondary batteries are one of the next-generation materials having high potential for application to secondary batteries. However, sodium-ion secondary batteries exhibit lower performance in terms of capacity, cycle-life characteristics, and rate characteristics than lithium-ion secondary batteries, making commercialization difficult. Accordingly, development of a positive electrode active material having high performance is essential for the commercialization of sodium-ion secondary batteries.

As a positive electrode active material for sodium-ion secondary batteries, a layered transition metal oxide having a simple structure, excellent electrochemical performance, and easy synthesis is typically used. Layered transition metal oxides are generally classified into O3-type and P2-type according to the crystal structure. A positive electrode active material based on the O3-type structure has a composition of Naₓ(TM)O₂ (2/3 < x ≤ 1), whereas a positive electrode active material based on the P2-type structure has a composition of Naₓ(TM)O₂ (x ≤ 2/3).

The P2-type layered oxide has relatively excellent cycle stability, but has limitations in commercial application due to disadvantages such as relatively degraded capacity characteristics resulting from the low sodium content thereof. The O3-type layered oxide has a higher energy density than the P2-type layered oxide particles, but has a disadvantage in that cycle stability is deteriorated because greater structural changes occur during charge/discharge. Specifically, air stability and water stability are poor, such that the oxide reacts with surrounding H₂O and CO₂ during storage and processing to form sodium by-products present as Na₂CO₃ and NaOH on the particle surface, thereby causing structural deterioration.

As one of various methods for doping a positive electrode active material to improve characteristics, a method of introducing mono-, multi-valence cations as doping elements has been studied. In this case, since the doping elements are positioned within the lattice of the positive electrode active material, may provide an effect of improving the physical/electrochemical characteristics of the positive electrode active material according to characteristics unique to the respective doping elements, such as bonding energy and oxidation state.

Such doping elements may be selected from various elements according to the intended effect and used after being controlled to have an optimum content. Since the doping effect may vary depending on various internal and external factors, such as the size of the doping elements, diffusivity, and the preparation environment of the positive electrode active material, composite doping using a combination of a plurality of elements may be more advantageous for improving the characteristics of the positive electrode active material than single doping using a single substituted element. Specifically, composite doping has an advantage in that various effects provided by the respective doping elements, such as structural stability, thermal stability, cation mixing variation, and capacity variation of the positive electrode active material, can be selectively and collectively provided.

However, even in the case of such composite doping, not only the effects that can be provided by the doping elements but also the characteristics of sodium and transition metal elements of the positive electrode active material into which the doping elements are introduced, and the correlation between the doping elements, should be considered. If the composite doping elements are configured without such consideration, doping efficiency may be reduced or, rather, the characteristics of the positive electrode active material may be deteriorated. Accordingly, there is a high demand for a technology capable of optimizing the composition and content of the doping elements in order to more efficiently improve the characteristics of the positive electrode active material.

In the present invention, a composite doping technology capable of optimizing the composition and content of doping elements has been developed to improve the structural stability of an O3-type positive electrode active material and realize high capacity and excellent life characteristics.

### [Summary of the Invention]

### [Technical Problem]

An object of the present invention is to improve the structural stability of an O3-type positive electrode active material to realize high capacity and excellent life characteristics, and specifically, to improve air/moisture stability and improve cycling life characteristics by applying composite doping metals to the positive electrode active material.

Another object of the present invention is to strengthen the Na-O bonding force to improve the structural stability of a sodium layer, strengthen the TM-O bonding force to prevent deterioration in the structural stability of a transition metal layer during charge/discharge, and improve capacity loss caused by the doping metals.

### [Means for Solving the Problem]

One embodiment of the present invention provides a positive electrode active material for a sodium secondary battery, comprising a sodium composite transition metal oxide containing at least sodium, a transition metal, a first doping metal, and a second doping metal, wherein a ratio (R_{M1}/R) of an ionic radius (R_{M1}) of the first doping metal to an ionic radius (R) of the sodium is 0.8 to 1.2, and wherein a ratio (R_{M2}/R) of an ionic radius (R_{M2}) of the second doping metal to the ionic radius (R) of the sodium is 0.5 to 0.7.

The positive electrode active material may have a ratio (R_{M2}/R_{Ni3+}) of the ionic radius (R_{M2}) of the second doping metal to an ionic radius (R_{Ni3+}) of trivalent nickel (Ni³⁺) of 1.0 to 1.2.

The first doping metal may be a divalent cation, and the second doping metal may be a tetravalent to hexavalent cation.

The first doping metal may be Ca, and the second doping metal may be at least one selected from the group consisting of V, Mo, W, and Nb.

The first doping metal may be included in an amount of 0.5 to 2 at mol% based on a total amount of sodium (Na) and the first doping metal in the sodium composite transition metal oxide, and the second doping metal may be included in an amount of 0.01 to 0.2 at mol% based on a total amount of metals excluding sodium (Na) and the first doping metal in the sodium composite transition metal oxide.

A ratio (M2-O/M1-O) of a second doping metal-oxygen bonding force (M2-O) to a first doping metal-oxygen bonding force (M1-O) may be 1.1 to 2, and a ratio (M2/M1) of a content (at mol) of the second doping metal (M2) to a content (at mol) of the first doping metal (M1) may be 0.03 to 15%.

The sodium composite transition metal oxide may be represented by the following Chemical Formula 1.

[Chemical Formula 1] NaₐM1_{b}[TMₓM2₁₋ₓ]O_{2+w}

In Chemical Formula 1,
TM is Ni and at least one selected from Fe, Mn, and Co, M1 is Ca, M2 is at least one selected from W, V, Mo, and Nb, and 0.8≤a≤1.1, 0.005≤b≤0.02, 0.8≤x≤0.9998, 0.0001≤1-x≤0.002, and -0.1≤w≤0.1.

The sodium composite transition metal oxide may include secondary particles in which a plurality of primary particles are aggregated, and the first doping metal and the second doping metal may be positioned on a surface of the secondary particle, on a surface of the primary particle, and/or in an interior of the primary particle.

The sodium composite transition metal oxide may have an O3-type crystal structure.

Another embodiment of the present invention provides a method of preparing a positive electrode active material for a sodium secondary battery, the method comprising dry mixing (a) a transition metal hydroxide precursor, a first doping metal compound, a second doping metal compound, and a sodium compound, and calcining (b) the mixture.

The dry mixing may comprise mixing the sodium compound in an equivalent amount such that Na/M (all metals excluding Na) is greater than 0.8 and less than 1, mixing the first doping metal in an amount of 0.5 to 2 at mol% based on a total amount of Na and the first doping metal, and mixing the second doping metal in an amount of 0.01 to 0.2 at mol% based on a total amount of metals excluding Na and the first doping metal.

The first doping metal compound may be an acetate compound, sulfide, nitride, phosphide, oxide, oxyhydroxide, hydroxide of Ca, or a combination thereof, and the second doping metal compound may be an acetate compound, sulfide, nitride, phosphide, oxide, oxyhydroxide, hydroxide of at least one selected from W, V, Mo, and Nb, or a combination thereof.

The calcining may be performed at a temperature of 700°C to 1,100°C for 5 hours to 40 hours.

Another embodiment of the present invention provides a positive electrode for a sodium secondary battery, including the positive electrode active material.

Another embodiment of the present invention provides a sodium secondary battery including the positive electrode, a negative electrode, and an electrolyte.

### [Advantageous Effects of the Invention]

According to the present invention, as a means for improving weakened bonding between TM and O, stronger Na₂O bonding energy can be established by effectively controlling charge transfer between Na and O through the introduction of specific composite doping metals. Accordingly, a structurally stable state and excellent air/water stability can be realized.

In addition, according to the present invention, doping into the sodium layer and the transition metal layer can be facilitated by the difference between the ionic radius of the first doping metal and Na⁺ and the difference between the ionic radius of the second doping metal and Na⁺. Subsequently, as a result of increasing the bonding force with oxygen due to the relatively high oxidation states of the first and second doping metals, the structural stability of the sodium layer and the transition metal layer can be improved, and there is an effect of enhancing ionic conductivity.

In addition, according to the present invention, by doping a cation having an ionic radius similar to that of Ni3+ and having a high oxidation state and reducing the proportion of Ni3+ by charge balance, the Ni²⁺/Ni³⁺ ratio can be increased, the structural stability of the transition metal layer can be improved, and capacity loss caused by the doping metals can be prevented.

Further, according to the present invention, by controlling the ratio of the bonding force of the first doping metal and the second doping metal with oxygen within a specific range while satisfying the ratio of the doping amounts of the first doping metal and the second doping metal within a specific range, distortion of the crystal structure caused by the difference in the bonding force with oxygen between the sodium layer and the transition metal layer during substitution with the composite doping metals can be suppressed.

### [Brief Description of the Drawings]

FIG. 1 is a surface/cross-sectional SEM-EDS mapping analysis image of positive electrode active material particles prepared in Examples 1 to 4 and Comparative Example 1.
FIGS. 2A, 2B and 2C are a STEM (scanning TEM) image of the positive electrode active material prepared according to Comparative Example 1, a TEM-EDS analysis image thereof, and a TEM image showing an interplanar distance of a sodium layer.
FIGS. 3A, 3B and 3C are a STEM (scanning TEM) image of the positive electrode active material prepared according to Example 1, a TEM-EDS analysis image thereof, and a TEM image showing an interplanar distance of a sodium layer.
FIGS. 4A, 4B and 4C are a STEM (scanning TEM) image of the positive electrode active material prepared according to Example 3, a TEM-EDS analysis image thereof, and a TEM image showing an interplanar distance of a sodium layer.

### [Mode for Carrying Out the Invention]

The advantages and features of the present invention, and methods for achieving the same, will become apparent with reference to the embodiments described below in detail in conjunction with the accompanying drawings. However, the present invention is not limited to the embodiments disclosed below, but will be embodied in various different forms. The embodiments are provided only to make the disclosure of the present invention complete and to fully inform a person having ordinary skill in the art to which the present invention pertains of the scope of the invention, and the present invention is defined only by the scope of the claims.

Unless otherwise defined, all terms used herein, including technical and scientific terms, may be used with meanings that can be commonly understood by a person having ordinary skill in the art to which the present invention pertains. Throughout the specification, when a portion is described as "including" a component, this means that other components are not excluded but may be further included unless specifically stated otherwise. In addition, singular forms include plural forms unless specifically stated otherwise in the context.

One embodiment of the present invention provides a positive electrode active material for a sodium secondary battery. The positive electrode active material includes a sodium composite transition metal oxide containing at least sodium, a transition metal, a first doping metal, and a second doping metal.

In general, since an O3-type oxide positive electrode active material has poor air/water stability, when exposed to air or brought into contact with water, an oxidation reaction and H⁺/Na⁺ exchange occur through reaction with H₂O and CO₂, thereby generating residual Na, such as NaOH and Na₂CO₃, on the surface of the positive electrode active material. The generated CO₃ is embedded in the transition metal layer to form CO₄ tetrahedra, thereby slowing Na⁺ diffusion and deteriorating electrochemical characteristics. In the present invention, as a means for improving weakened bonding between TM and O, stronger Na₂O bonding energy can be established by effectively controlling charge transfer between Na and O through the introduction of specific composite doping metals. Accordingly, a structurally stable state and excellent air/water stability can be realized.

The first and second doping metals are such that a ratio (R_{M1}/R) of an ionic radius (R_{M1}) of the first doping metal to an ionic radius (R) of sodium is 0.8 to 1.2, and a ratio (R_{M2}/R) of an ionic radius (R_{M2}) of the second doping metal to the ionic radius (R) of sodium is 0.5 to 0.7.

For example, the ionic radius ratio (R_{M1}/R) may be 0.9 to 1.2, 1.0 to 1.2, 1.0 to 1.15, or 1.0 to 1.1, and the ratio (R_{M2}/R) of the ionic radius may be 0.5 to 0.65, 0.55 to 0.7, 0.55 to 0.65, or 0.59 to 0.64. The first doping metal may have an ionic radius of 0.9 to 1.2 Å, 1.0 to 1.2 Å, or 1.0 to 1.15 Å, and the second doping metal may have an ionic radius of 0.55 to 0.7 Å, 0.5 to 0.65 Å, 0.55 to 0.7 Å, 0.55 to 0.65 Å, or 0.59 to 0.64 Å.

Since the first doping metal (M1) has an ionic radius range similar to that of Na⁺ (ionic radius: 1.02 Å), the first doping metal (M1) can be readily doped into the sodium layer. In addition, since the oxidation state of M1²⁺ is higher than that of Na¹⁺, the bonding force M1-O with oxygen is increased, whereby the structural stability of the sodium layer can be improved. As a result, vacant space in the lattice structure is increased, thereby increasing the c-axis of the lattice, and thus ionic conductivity can be enhanced.

Since the second doping metal (M2) has an ionic radius in a range of 0.5 to 0.7 times that of Na⁺ (ionic radius: 1.02 Å), the second doping metal (M2) is readily doped into the transition metal layer rather than the sodium layer. In addition, due to the high oxidation state thereof, the bonding force M2-O with oxygen is increased, whereby the structural stability of the transition metal layer during charge/discharge can be improved.

Further, when the first doping metal or the second doping metal is singly doped, a distortion phenomenon caused by a difference in bonding force with oxygen between the sodium layer and the transition metal layer occurs, resulting in formation of an unstable structure. In contrast, according to the present invention, since the first doping metal is compositely doped into the sodium layer and the second doping metal is compositely doped into the transition metal layer, the bonding force with oxygen is increased in both the sodium layer and the transition metal layer, thereby reducing a relative difference in bonding force between the sodium layer-O and the transition metal layer-O caused by single doping. As a result, a distortion phenomenon in the entire crystal structure is suppressed, structural stability is improved, and electrochemical life deterioration can be prevented.

The second doping metal may have a ratio (R_{M2}/R_{Ni}) of an ionic radius (R_{M2}) of the second doping metal to an ionic radius (R_{Ni}) of trivalent nickel (Ni³⁺) of 0.9 to 1.2, 1.0 to 1.2, or 1.0 to 1.15.

In the sodium transition metal oxide, Ni3+ may have an oxidation state changed to 2+ to 4+ during the calcination step or during charge/discharge. Since Ni has an unstable electron configuration when present in the 3+ oxidation state and has a stable structure when present in the 2+ oxidation state, the Ni²⁺/Ni³⁺ ratio can be increased by reducing the proportion of Ni³⁺ through charge balance by doping a cation having an ionic radius similar to that of Ni³⁺ and having a high oxidation state.

Further, in a conventional lithium transition metal oxide (LIB), it is important to suppress cation mixing in which Ni²⁺ (0.69 Å), having an ionic radius similar to that of Li⁺ (0.76 Å), exchanges positions with the Li⁺ site. However, in the case of a sodium transition metal oxide, since Na⁺ has an ionic radius of 1.02 Å, cation mixing is unlikely to occur even when the proportion of Ni²⁺ having an ionic radius of 0.69 Å is increased.

The first doping metal may be Ca as a divalent cation, and the second doping metal may be at least one selected from the group consisting of V, Mo, W, and Nb as a tetravalent to hexavalent cation. Since the first doping metal Ca²⁺ (1.10 Å) has an ionic radius within ±10% of that of Na⁺ (1.02 Å) and has a higher oxidation state than Na⁺, the above-described effects can be further improved. In the case of the second doping metals V⁵⁺ (0.59 Å), Mo⁶⁺ (0.59 Å), W⁶⁺ (0.60 Å), and Nb⁵⁺ (0.64 Å), since the ionic radii thereof are within ±20% of those of Ni³⁺ (0.56 Å), Fe³⁺ (0.63 Å), and Mn⁴⁺ (0.53 Å), the second doping metals can be readily doped into the transition metal layer. In addition, during charge/discharge, the transition metals have oxidation states of Ni2+/3+/4+ and Mn3+/4+, and since the second doping metals having an oxidation state of +5 or +6 have higher oxidation states, when doped into the transition metal layer, the proportion of Ni2+ can be increased and capacity loss caused by the doping metals can be prevented.

The first doping metal may have a bonding force with oxygen (M1-O) of 350 to 550 kJ/mol, for example, 400 to 500 kJ/mol or 450 to 480 kJ/mol, and the second doping metal may have a bonding force with oxygen (M2-O) of 550 to 800 kJ/mol, for example, 600 to 770 kJ/mol or 650 to 770 kJ/mol. Accordingly, the bonding force M1-O with oxygen in the sodium layer in the crystal structure of the positive electrode active material is increased, whereby the structural stability of the sodium layer can be improved, and vacant space in the lattice structure is increased, so that the c-axis in the lattice is increased, and thus ionic conductivity can be enhanced. In addition, the bonding force M2-O with oxygen in the transition metal layer of the crystal structure of the positive electrode active material is increased, whereby the structural stability of the transition metal layer during charge/discharge can be improved.

The first doping metal (M1) may be included in an amount of 0.5 to 2 at mol% based on the total amount of sodium (Na) and the first doping metal (M1) in the sodium composite transition metal oxide, for example, 1.0 to 2 at mol%, 1.2 to 1.8 at mol%, or 1.3 to 7 at mol%.

The second doping metal (M2) may be included in an amount of 0.02 to 0.2 at mol% based on the total amount of metals excluding sodium (Na) and the first doping metal (M1) in the sodium composite transition metal oxide, for example, 0.02 to 0.1 at mol%, 0.02 to 0.08 at mol%, 0.02 to 0.07 at mol%, or 0.02 to 0.06 at mol%.

Further, a ratio (M2-O/M1-O) of the second doping metal-oxygen bonding force (M2-O) to the first doping metal-oxygen bonding force (M1-O) may be 1.1 to 2, and a ratio (M2/M1) of the content (doping amount, at mol) of the second doping metal (M2) to the content (doping amount, at mol) of the first doping metal (M1) may be 0.03 to 15. Specifically, the ratio (M2-O/M1-O) of the second doping metal-oxygen bonding force to the first doping metal-oxygen bonding force may be 1.1 to 1.7 or 1.4 to 1.7, and the doping amount ratio (M2/M1) may be 0.1 to 10, 0.3 to 10, 0.5 to 10, 0.7 to 10, 1 to 10, 3 to 10, 3 to 7, or 3 to 5.

When the above numerical ranges are satisfied, the relative difference in bonding force between the sodium layer-O and the transition metal layer-O can be minimized. Accordingly, when the composite doping metals are substituted, distortion of the crystal structure caused by the difference between the sodium layer-oxygen bonding force and the transition metal layer-oxygen bonding force can be suppressed.

The sodium composite transition metal oxide is represented by the following Chemical Formula 1:

[Chemical Formula 1] NaₐM1_{b}[TMₓM2₁₋ₓ]O_{2+w}

In Chemical Formula 1, TM may be at least one selected from the group consisting of Fe, Mn, Ni, and Co, M1 may be Ca, M2 may be at least one selected from the group consisting of W, V, Mo, and Nb, and 0.8≤a≤1.1, 0.005≤b≤0.02, 0.8≤x≤0.9998, 0.0001≤1-x≤0.002, and -0.1≤w≤0.1 may be satisfied.

In Chemical Formula 1, TM (transition metal) may include Ni and at least one selected from Fe, Mn, and Co. Preferably, TM may be Ni, Co, and Mn, or Ni, Fe, and Mn.

The M1 (first doping metal) and the M2 (second doping metal) are the same as described above.

Meanwhile, the sodium composite transition metal oxide may further include a metal (M3) different from TM, M1, and M2, and the M3 may be at least one selected from the group consisting of P, Sr, Ba, Zr, Co, Mn, Al, W, Ce, Hf, Ta, Cr, F, Mg, Cr, V, Fe, Zn, Si, Y, Ga, Sn, Mo, Ge, Nb, B, Nb, Gd, and Cu.

The sodium composite transition metal oxide may include secondary particles in which at least one primary particle is aggregated, and the first doping metal and the second doping metal may be positioned on the surface of the secondary particle, on the surface of the primary particle, and/or in the interior of the primary particle. For example, the first doping metal and the second doping metal may each be partially or entirely present at the interface between the primary particles positioned inside the secondary particle and/or on the surface of the secondary particle. When the first doping metal and the second doping metal are partially present on the surface of the primary particle and/or the secondary particle, the shell may be present in the form of islands. When the first doping metal and the second doping metal are entirely present, the shell may be present in the form of a uniform coating.

Meanwhile, the term "secondary particles in which at least one primary particle is aggregated" should be construed to include both "particles formed by aggregation of a plurality of primary particles" and "non-aggregated single particles composed of a single crystal."

Further, the primary particle and the secondary particle may each independently have a rod shape, an elliptical shape, and/or an irregular shape.

When an average major-axis length is used as an index representing the sizes of the primary particle and the secondary particle, the primary particle constituting the sodium composite transition metal oxide may have an average major-axis length of 0.1 µm to 5 µm, and the secondary particle may have an average major-axis length of 1 µm to 30 µm. The average major-axis length of the secondary particle may vary depending on the number of primary particles constituting the secondary particle, and the positive electrode active material may include particles having various average major-axis lengths.

The sodium composite transition metal oxide has an O3-type crystal structure, and the sodium composite transition metal oxide may be physically and/or chemically bonded to the primary particle. Further, the sodium composite transition metal oxide may be present in a state of forming a solid solution with the primary particle.

Based on the secondary particle, the sodium composite transition metal oxide may be partially or entirely present at the interface between the primary particles positioned inside the secondary particle and/or on the surface of the secondary particle. When the sodium composite transition metal oxide is partially present on the surface of the primary particle and/or the secondary particle, the shell may be present in the form of islands.

Another embodiment of the present invention provides a method of preparing the positive electrode active material for a sodium secondary battery.

The method includes a step of dry-mixing a transition metal hydroxide precursor, a first doping metal compound, a second doping metal compound, and a sodium (Na) compound, and a step of calcining.

In the dry mixing process, by applying a dry process, the first doping metal and the second doping metal can be uniformly doped onto the surface and in the interior of the transition metal hydroxide precursor particles. In contrast, when the transition metal is doped by a wet process, selection of doping compounds is limited, and the process becomes more complicated, resulting in an increase in cost.

The dry mixing may comprise mixing the sodium compound in an equivalent amount such that Na/M (all metals excluding Na) is greater than 0.8 and less than 1.

When the mixing amount of the sodium compound is within the above range, the positive electrode active material to be prepared may have an O3-type layered structure as a crystal structure, and accordingly may have a higher energy density, high air and moisture stability, and may be less sensitive to synthesis conditions (temperature and atmosphere). In addition, within the sodium content range, battery discharge capacity can be improved, and unreacted residual Na can be minimized.

The first doping metal is mixed in an amount of 0.5 to 2 at mol% based on the total amount of Na and the first doping metal, and the second doping metal may be mixed in an amount of 0.02 to 0.2 at mol% based on the total amount of metals excluding Na and the first doping metal.

The transition metal hydroxide precursor may be represented by the following Chemical Formula 2.

[Chemical Formula 2] TM(OH)₂

wherein TM may be at least one selected from the group consisting of Co, Ni, Mn, and Fe.

The first doping metal compound may be a compound of Ca selected from the group consisting of an acetate compound, a sulfide, a nitride, a phosphide, an oxide, an oxyhydroxide, a hydroxide, and a combination thereof, and the second doping metal compound may be a compound of at least one selected from the group consisting of W, V, Mo, and Nb, selected from the group consisting of an acetate compound, a sulfide, a nitride, a phosphide, an oxide, an oxyhydroxide, a hydroxide, and a combination thereof.

The sodium compound may be at least one selected from the group consisting of Na₂CO₃, NaOH, NaNO₃, CH₃COONa, and Na₂(COO)₂, and preferably may be Na₂CO₃, NaOH, or a combination thereof.

The calcination process may be performed at a temperature of 700 to 1,100°C. When the calcination temperature is within the above range, the reaction between the raw materials may sufficiently proceed, and the particles may uniformly grow. More preferably, the calcination may be performed at a temperature of 750 to 1,050°C, 850 to 1,050°C, or 900 to 1,000°C. The calcination may be performed for 5 hours to 40 hours. When the calcination time is within the above range, a highly crystalline positive electrode active material can be obtained, the particle size is appropriate, and production efficiency can be improved. More preferably, the calcination may be performed for 5 to 20 hours, 5 to 18 hours, 8 to 15 hours, or 10 to 14 hours.

Another embodiment of the present invention provides a positive electrode for a sodium secondary battery including the positive electrode active material, and a sodium secondary battery.

The positive electrode includes a positive electrode current collector and a positive electrode active material layer positioned on the positive electrode current collector, and the positive electrode active material according to one aspect of the present invention is present in the positive electrode active material layer.

The positive electrode current collector is not particularly limited so long as it has conductivity without causing a chemical change in the battery. For example, stainless steel, aluminum, nickel, titanium, fired carbon, aluminum or stainless steel surface-treated with carbon, nickel, titanium, silver, or the like, or the like may be used. In addition, the positive electrode current collector may typically have a thickness of about 3 µm to about 500 µm, and may have fine irregularities formed on the surface thereof to improve adhesion of the positive electrode active material. The positive electrode current collector may be provided in various forms, such as a film, a sheet, a foil, a net, a porous body, a foam, or a nonwoven fabric.

Further, the positive electrode active material layer may be a layer including the above-described positive electrode active material together with a conductive material and a binder.

Here, the conductive material is used to impart conductivity to the electrode, and may be used without particular limitation so long as it has conductivity without causing a chemical change in the positive electrode active material. Non-limiting examples of the conductive material include graphite such as natural graphite and artificial graphite; carbon-based materials such as carbon black, acetylene black, Ketjen black, channel black, furnace black, lamp black, thermal black, and carbon fibers; metal powders or metal fibers such as copper, nickel, aluminum, and silver; conductive whiskers such as zinc oxide and potassium titanate; conductive metal oxides such as titanium oxide; conductive polymers such as polyphenylene derivatives; and the like. The conductive material may generally be included in an amount of 1 wt% to 30 wt% based on the total weight of the positive electrode active material layer.

Further, the binder is a material serving to improve adhesion between the positive electrode active material particles and adhesion between the positive electrode active material and the current collector. Non-limiting examples of the binder include polyvinylidene fluoride (PVDF), poly(vinylidene fluoride-co-hexafluoropropylene) (PVDF-co-HFP), polyvinyl alcohol, polyacrylonitrile, carboxymethyl cellulose (CMC), starch, hydroxypropyl cellulose, regenerated cellulose, polyvinyl pyrrolidone, tetrafluoroethylene, polyethylene, polypropylene, ethylene-propylene-diene polymer (EPDM), sulfonated EPDM, styrene-butadiene rubber (SBR), fluororubber, various copolymers thereof, and the like. The binder may generally be included in an amount of 1 wt% to 30 wt% based on the total weight of the positive electrode active material layer.

The positive electrode according to one embodiment of the present invention may be prepared according to a conventional method of preparing a positive electrode for a sodium secondary battery, except that the above-described positive electrode active material is used. For example, the positive electrode may be prepared by applying a slurry for forming a positive electrode active material layer including the positive electrode active material and, optionally, a binder and a conductive material, onto a positive electrode current collector, followed by drying and roll-pressing. According to another example, the positive electrode may be prepared by casting the slurry for forming a positive electrode active material layer onto a separate support, peeling the positive electrode active material layer from the support to obtain a film, and laminating the film onto the positive electrode current collector.

According to another aspect of the present invention, an electrochemical device including the above-described positive electrode is provided. Here, the electrochemical device may specifically be a battery, a capacitor, or the like, and more specifically may be a sodium secondary battery.

The sodium secondary battery includes the positive electrode, a negative electrode disposed opposite to the positive electrode, a separator interposed between the positive electrode and the negative electrode, and an electrolyte (electrolyte solution). Further, the sodium secondary battery may include a battery case accommodating an electrode assembly including the positive electrode, the negative electrode, and the separator, and a sealing member sealing the battery case.

In this case, depending on the shape of the battery case, the sodium secondary battery may be classified into a can-type sodium secondary battery in which the electrode assembly is accommodated in a metal can, and a pouch-type sodium secondary battery in which the electrode assembly is accommodated in a pouch formed of a sheet such as an aluminum laminate.

In particular, in the case of a pouch-type sodium secondary battery using the positive electrode including the positive electrode active material according to various embodiments of the present invention, since the possibility of occurrence of side reactions between the positive electrode active material and the electrolyte solution is low, there is an advantage in that stability during storage and/or operation is improved and, at the same time, gas generation can be reduced.

Hereinafter, the present invention will be described in detail with reference to Examples. However, the following Examples are provided to describe the present invention in more detail, and the scope of the present invention is not limited by the following Examples.

### Examples

### (Example 1 to 9 and Comparative Examples 1 to 2)

An NFM111 precursor (Ni_{0.33}Fe_{0.33}Mn_{0.33}(OH)₂), a first doping metal (M1) precursor, and a second doping metal (M2) precursor shown in Table 1 below were dry-mixed using a hand mixer.

Na₂CO₃ was mixed with the mixed precursor at an equivalent amount of Na/(Ni+Fe+Mn+M2)=1.0.

The prepared mixture was placed in an alumina crucible, calcined at 900°C for 10 hours in an air atmosphere, and then cooled to room temperature to prepare an O3-type positive electrode active material.

The prepared positive electrode active material was placed in a mixer and pulverized for 1 minute and 30 seconds.

A positive electrode slurry was prepared by dispersing 96 wt% of the prepared positive electrode active material, 2 wt% of carbon black, and 2 wt% of a PVdF binder in 2 g of N-methyl-2-pyrrolidone (NMP). The positive electrode slurry was uniformly coated onto an aluminum thin film having a thickness of 15 µm and vacuum-dried at 135°C to prepare a positive electrode for a sodium secondary battery.

Using the positive electrode, a sodium secondary battery (coin cell) was fabricated by using a sodium metal plate as a counter electrode, porous glass fiber (thickness: 200 µm) as a separator, and an electrolyte solution in which NaPF₆ was present at a concentration of 1.0 M in a mixed solvent of propylene carbonate and fluoroethylene carbonate at a volume ratio of 98:2.

**[Table 1]**

| | First Doping Metal (M1) | | | Second Doping Metal (M2) | | | |
|---|---|---|---|---|---|---|---|
| | M1 Precur -sor | M1 Content (at mol%) | M1 Oxidation State / (M1/Na+ ) Ionic Radius Ratio | M2 Precur -sor | M2 Content (at mol%) | M2 Oxidation State / (M2/Na+ ) Ionic Radius Ratio / | (M1/Ni3+ ) Ionic Radius Ratio |
| Example 1 | Ca(OH)₂ | 1.5 | Ca²⁺/ 1.1 | Nb₂O₅ | 0.05 | Nb⁵⁺/ 0.62 | 1.14 |
| Example 2 | Ca(OH)₂ | 1.5 | Ca²⁺/ 1.1 | V₂O₅ | 0.05 | V⁵⁺/ 0.57 | 1.05 |
| Example 3 | Ca(OH)₂ | 1.5 | Ca²⁺/ 1.1 | MoO₃ | 0.05 | Mo⁶⁺/ 0.57 | 1.05 |
| Example 4 | Ca(OH)₂ | 1.5 | Ca²⁺/ 1.1 | WO₃ | 0.05 | W⁶⁺/ 0.58 | 1.07 |
| Example 5 | Ca(OH)₂ | 1.5 | Ca²⁺/ 1.1 | Nb₂O₅ | 0.1 | Nb⁵⁺/ 0.62 | 1.14 |
| Example 6 | Ca(OH)₂ | 1.5 | Ca²⁺/ 1.1 | Nb₂O₅ | 0.2 | Nb⁵⁺/ 0.62 | 1.14 |
| Example 7 | Ca(OH)₂ | 1.5 | Ca²⁺/ 1.1 | WO₃ | 0.1 | W⁶⁺/ 0.58 | 1.07 |
| Example 8 | Ca(OH)₂ | 1.5 | Ca²⁺/ 1.1 | WO₃ | 0.2 | W⁶⁺/ 0.58 | 1.07 |
| Example 9 | Ca(OH)₂ | 1.5 | Ca²⁺/ 1.1 | Nb₂O₅ | 0.5 | Nb⁵⁺/ 0.62 | 1.14 |
| Comparative Example 1 | Ca(OH)₂ | 1.5 | Ca²⁺/ 1.1 | - | - | - | - |
| Comparative Example 2 | - | - | - | - | - | - | - |
| * **Oxidation state (ionic radius):** Na⁺ (1.02 Å), Ca²⁺ (1.10 Å), Nb⁵⁺ (0.64 Å), Ni³⁺ (0.56 Å), V⁵⁺ (0.59 Å), Mo⁶⁺ (0.59 Å), and W⁶⁺ (0.60 Å) | | | | | | | |
| * **Bonding energy (kJ/mol):** Ca-O 464.8 kJ/mol, Nb-O 753 kJ/mol, W-O 720 kJ/mol, V-O 637 kJ/mol, and Mo-O 607 kJ/mol. | | | | | | | |

### Experimental Examples

### Experimental Example 1: SEM-EDS Analysis of Positive Electrode Active Material Particles

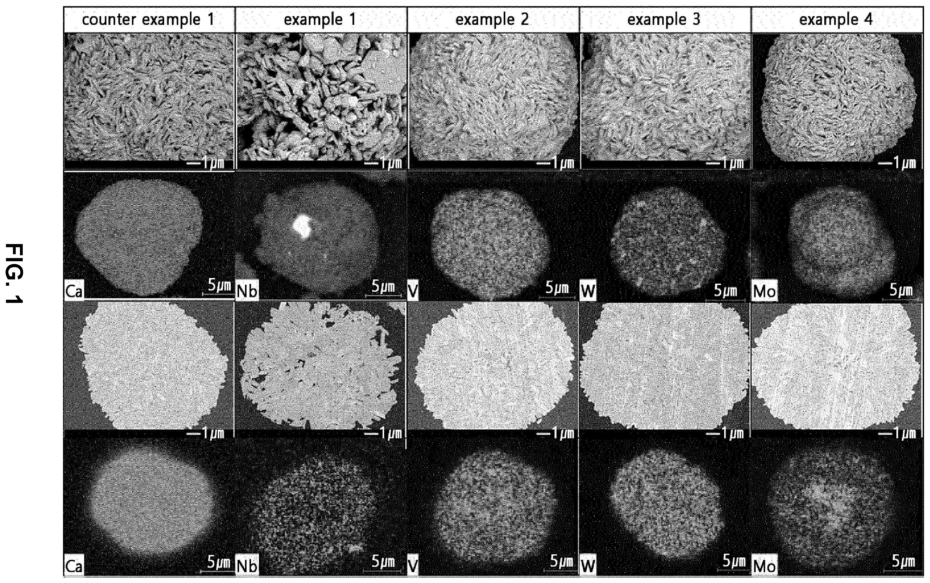

SEM-EDS mapping analysis was performed on the surface and cross section of the positive electrode active material particles prepared in Examples 1 to 4 and Comparative Example 1, and the results are shown in FIG. 1.

As shown in FIG. 1, Nb, W, V, and Mo were confirmed to be uniformly distributed over the surface as a whole, while a portion thereof was partially present in the form of islands. In addition, all of the doping metals were diffused into the interior, and Nb and Mo were confirmed to be partially present in some regions.

Further, in the case of Example 1, a change in the morphology of the positive electrode active material to a plate shape due to Nb doping was confirmed. Accordingly, it is analyzed that side reactions with the electrolyte are analyzed to be suppressed due to a reduction in surface area.

### Experimental Example 2: STEM (Scanning TEM) and TEM-EDS Analysis of Positive Electrode Active Material Particles

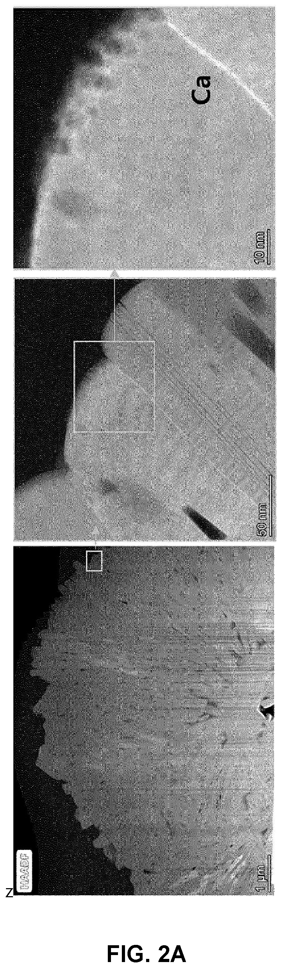

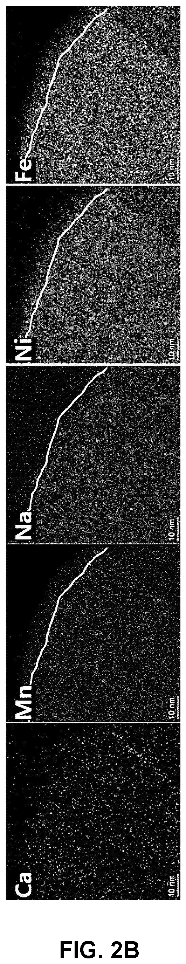

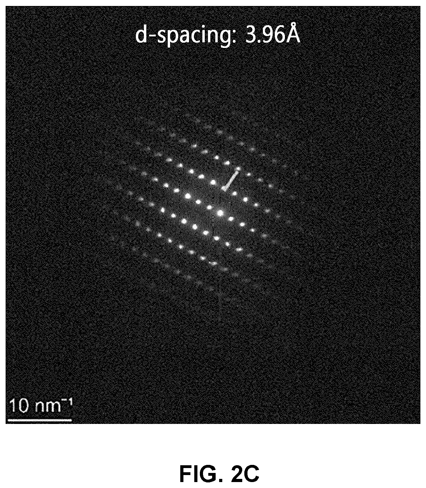

Referring to FIG. 2A, FIG. 2B, and FIG. 2C, in the case of the positive electrode active material prepared according to Comparative Example 1, a Na-deficient layer could be confirmed in a region having a thickness of 10 nm from the surface in a direction perpendicular to the TM layer on the surface of the primary particle.

In addition, compared with before Ca doping, it could be confirmed that the interlayer spacing of the sodium layer (3.95 to 4.00 Å) increased, and that Ca was present at the grain boundaries and inside the primary particles.

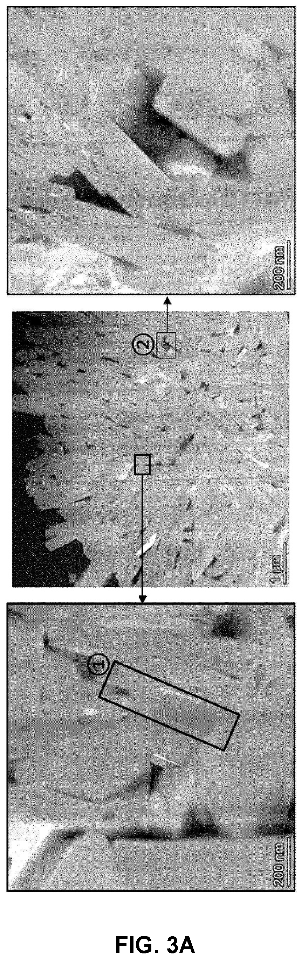

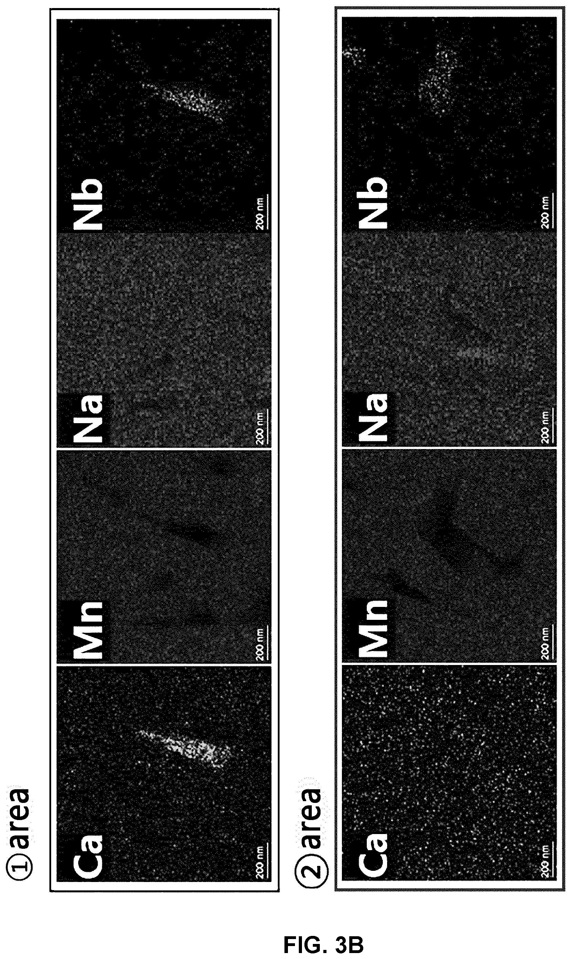

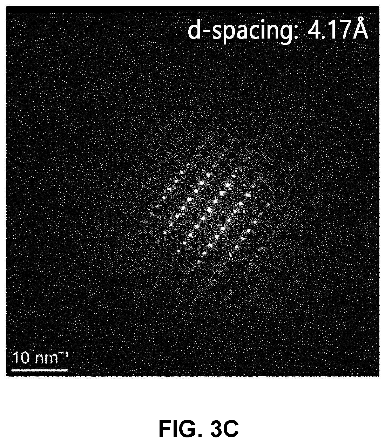

Referring to FIG. 3A, FIG. 3B, and FIG. 3C, in the case of the positive electrode active material prepared according to Example 1, it could be confirmed that the interlayer spacing of the sodium layer (4.15 to 4.25 Å) increased due to the simultaneous doping of Ca and Nb, as compared with Comparative Example 1. This is analyzed to result from the effect of expanding the Na interlayer spacing and thus to be advantageous for Na-ion diffusion.

In addition, Ca and Nb were present in an island form at the grain boundaries between the primary particles, and Nb is analyzed to be coated as niobium oxide (NbO₂) on a portion of the surface of the primary particles during doping.

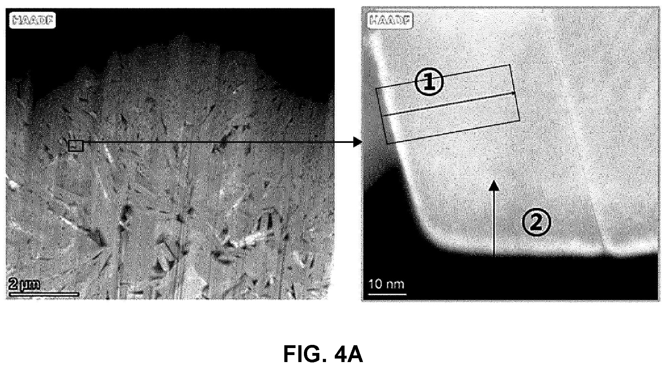

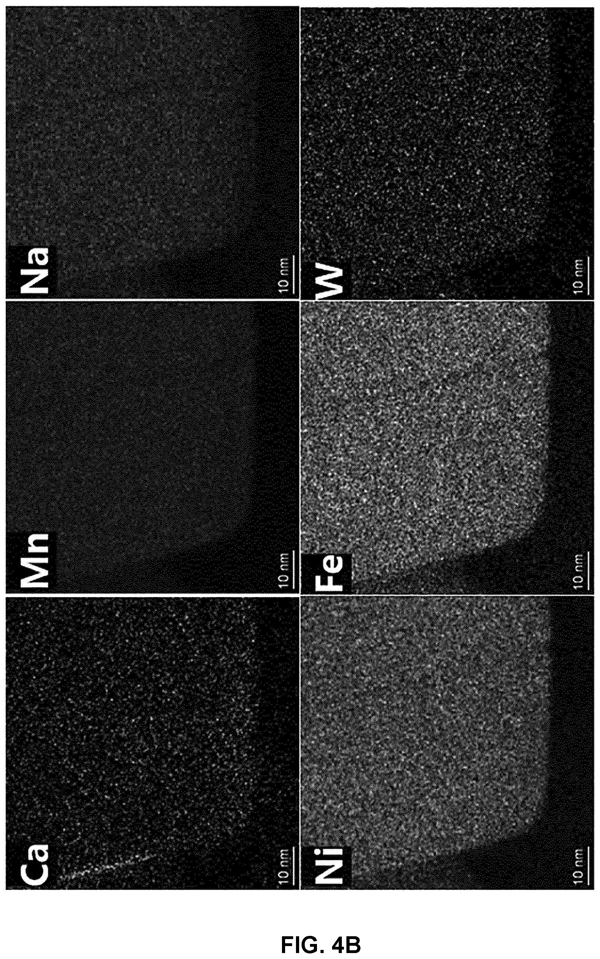

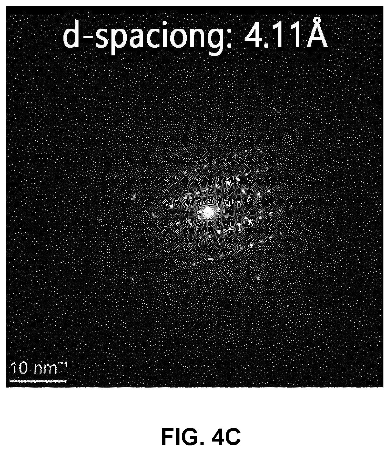

Referring to FIG. 4A, FIG. 4B, and FIG. 4C, in the case of the positive electrode active material prepared according to Example 3, it was confirmed that the interlayer spacing (4.10 to 4.20 Å) increased due to the simultaneous doping of Ca and W, as compared with Comparative Example 1. This is analyzed to be advantageous for Na-ion diffusion due to the effect of expanding the interlayer spacing of the sodium layer.

In addition, it is confirmed that Ca was present inside and on the surface of the primary particles, and that W was uniformly distributed.

### Experimental Example 3: Evaluation of Charge Transfer Resistance

### Electrochemical Impedance Spectroscopy (EIS) Characteristics

With respect to the same lithium secondary battery, after charging under a 1C condition, resistance was measured within a frequency range of 10 kHz to 0.01 Hz at 10 mV using electrochemical impedance spectroscopy (EIS), and an Rct (charge transfer resistance) value was calculated.

**[Table 2]**

| | M1 Precursor | M1 Content (at mol%) | M2 Precursor | M2 Content (at mol%) | Doping Amount Ratio (M2/M1) (%) | EIS (Ω) |
|---|---|---|---|---|---|---|
| Example 1 | Ca(OH)₂ | 1.5 | Nb₂O₅ | 0.05 | 3.3 | 9.78 |
| Example 5 | Ca(OH)₂ | 1.5 | Nb₂O₅ | 0.1 | 6.7 | 10.58 |
| Example 6 | Ca(OH)₂ | 1.5 | Nb₂O₅ | 0.2 | 13.3 | 12.47 |
| Example 7 | Ca(OH)₂ | 1.5 | WO₃ | 0.1 | 6.7 | 10.39 |
| Example 8 | Ca(OH)₂ | 1.5 | WO₃ | 0.2 | 13.3 | 11.98 |
| Example 9 | Ca(OH)₂ | 1.5 | Nb₂O₅ | 0.5 | 33.3 | 20.14 |
| Comparative Example 1 | Ca(OH)₂ | 1.5 | - | - | 0 | 11.17 |
| Comparative Example 2 | - | - | - | - | - | 12.03 |

Referring to Table 2, Examples 1, 5, and 7 exhibited lower resistance values than Comparative Examples 1 and 2, which is interpreted as a result of structural stabilization through doping.

In addition, it was confirmed that Example 1 had the lowest resistance value. Compared therewith, in Examples 5, 6, and 9, it is confirmed that the resistance increases as the content of the doping element increases or as the doping amount ratio (M2/M1) increases. Likewise, in the case of Examples 7 and 8, it can be confirmed that the resistance increases as the content of the doping element or the doping amount ratio (M2/M1) increases.

Although the performance is improved due to the structural stabilization effect as the content of the doping element increases, performance deteriorates when the doping element is introduced in an amount greater than the optimum content. Therefore, the above results are interpreted to be attributable to the fact that the doping element acted as resistance because it was doped in an amount exceeding the optimum condition.

### Experimental Example 4: Evaluation of Electrochemical Characteristics of Sodium Secondary Batteries

### * Charge Capacity, Discharge Capacity, and Charge/Discharge Efficiency

With respect to the lithium secondary batteries (coin cells) prepared according to Examples 1 to 4, Example 9, and Comparative Examples 1 and 2, the initial charge capacity, initial discharge capacity, initial coulombic efficiency, and rate capability (discharge capacity ratio; rate capability (C-rate)) were measured through charge/discharge tests conducted at 25°C, within a voltage range of 2.2 V to 4.1 V, and at discharge rates of 0.1C to 2.0C, using an electrochemical analyzer (Toyo, Toscat-3100).

### * Life Characteristics (Cycle Capacity Retention)

With respect to the same sodium secondary battery, charge/discharge cycling was performed 50 times under 0.5C/0.5C conditions within an operating voltage range of 2.2 V to 4.1 V at 25°C, and the ratio of the discharge capacity at the 50th cycle relative to the initial capacity (cycle capacity retention; capacity retention) was measured.

### * Output Efficiency (C-rate)

With respect to the same sodium secondary battery, the Output Efficiency (C-rate) at 0.1C/0.1C, 0.2C/0.2C, 0.33C/0.33C, 1.0C/1.0C, and 2.0C/2.0C was measured through charge/discharge tests conducted at 25°C, within a voltage range of 2.2 V to 4.1 V, and at discharge rates of 0.1C to 5.0C, using an electrochemical analyzer (Toyo, Toscat-3100).

The measurement results are shown in Tables 3 and 4 below.

**[Table 3]**

| | Example 1 | Example 2 | Example 3 | Example 4 | Example 9 | Comparative Example 1 | Comparative Example 2 |
|---|---|---|---|---|---|---|---|
| 1st CH (mAh/g) | 159.6 | 162.5 | 173.8 | 161.8 | 153.3 | 162.4 | 161.6 |
| 1st DCH (mAh/g) | 146.5 | 146.8 | 157.8 | 151.7 | 143.2 | 147.3 | 149.0 |
| ICE (%) | 91.8 | 90.3 | 90.8 | 93.7 | 93.4 | 90.7 | 92.2 |
| 1 Cycle DCH (mAh/g) | 137.8 | 136.1 | 146.9 | 136.2 | 134.6 | 136.8 | 139.6 |
| 50 Cycle DCH (mAh/g) | 124.7 | 119.3 | 128.0 | 117.2 | 88.5 | 118.0 | 116.7 |
| 50 Cycle retention (%) | 90.5 | 87.6 | 87.2 | 86.0 | 65.7 | 86.2 | 83.6 |

Referring to Table 3, the sodium secondary battery prepared according to Comparative Example 1 exhibited a life retention of 86.2% at the 50th cycle, whereas Example 1 had the most excellent life characteristic of 90.5% at the 50th cycle. These results are analyzed to be attributable to the fact that, as the size of the primary particles increased, the contact area with the electrolyte solution decreased as a result of the surface area becoming larger, and thus side reactions with the electrolyte solution were suppressed.

In the case of Example 2, it is analyzed that the volume change of the positive electrode active material occurring during charge/discharge is suppressed by the strong V-O (637 kJ/mol) bond, and that this is a result of improved structural stability.

In the case of Example 3, an increase in capacity was confirmed, which is analyzed to result from an increase in the Ni²⁺/Ni³⁺ ratio due to charge balance caused by the specific multivalent cation doping of the present invention.

In the case of Example 4, it is analyzed that migration of the transition metal (TM) is reduced because fewer oxygen vacancies were present due to the strong Mo-O (607 kJ/mol) bond.

In the case of Example 9, low initial charge/discharge capacity and life deterioration were exhibited. This is analyzed to be attributable to the fact that the excessive amount of the doping element acted as resistance, which is consistent with the above-described EIS results.

**[Table 4]**

| (2.2-4.1V) | Example 1 | Example 2 | Example 3 | Example 4 | Comparative Example 1 |
|---|---|---|---|---|---|
| 0.1C (%) | 100 | 100 | 100 | 100 | 100 |
| 0.2C (%) | 96.7 | 95.4 | 95.8 | 96.2 | 95.4 |
| 0.33C (%) | 91.0 | 88.2 | 89.0 | 89.5 | 88.0 |
| 1C (%) | 73.7 | 72.8 | 74.0 | 74.6 | 72.1 |
| 2C (%) | 54.7 | 53.1 | 56.7 | 56.2 | 52.5 |

Referring to Table 4, it was confirmed that Examples 1 to 4 exhibited improved performance at high rates as compared with Comparative Example 1. This is analyzed to be attributable to the fact that the sodium layer spacing was expanded by the multivalent cation doping, thereby being advantageous for Na diffusion.

In addition, in the case of Example 3, the capacity retention at high rates was found to be the best.

As described above, although the present invention has been illustrated and described with respect to specific embodiments, it will be apparent to a person having ordinary skill in the art that the present invention may be variously improved and changed without departing from the technical spirit of the present invention provided by the following claims.

## Claims

1. A positive electrode active material for a sodium secondary battery, comprising:
a sodium composite transition metal oxide including at least sodium, a transition metal, a first doping metal, and a second doping metal,
wherein a ratio (R_{M1}/R) of an ionic radius (R_{M1}) of the first doping metal to an ionic radius (R) of the sodium is 0.8 to 1.2, and
wherein a ratio (R_{M2}/R) of an ionic radius (R_{M2}) of the second doping metal to the ionic radius (R) of the sodium is 0.5 to 0.7.

2. The positive electrode active material for a sodium secondary battery according to claim 1,
wherein a ratio (R_{M2}/R_{Ni3+}) of the ionic radius (R_{M2}) of the second doping metal to an ionic radius (R_{Ni3+}) of trivalent nickel (Ni3+) is 1.0 to 1.2.

3. The positive electrode active material for a sodium secondary battery according to claim 1,
wherein the first doping metal is a divalent cation, and
wherein the second doping metal is a tetravalent to hexavalent cation.

4. The positive electrode active material for a sodium secondary battery according to claim 3,
wherein the first doping metal is Ca, and
wherein the second doping metal is at least one selected from the group consisting of V, Mo, W, and Nb.

5. The positive electrode active material for a sodium secondary battery according to claim 1,
wherein the first doping metal is included in an amount of 0.5 to 2 at mol% based on a total amount of sodium (Na) and the first doping metal in the sodium composite transition metal oxide, and
wherein the second doping metal is included in an amount of 0.01 to 0.2 at mol% based on a total amount of metals excluding sodium (Na) and the first doping metal in the sodium composite transition metal oxide.

6. The positive electrode active material for a sodium secondary battery according to claim 1,
wherein a ratio (M2-O/M1-O) of a second doping metal-oxygen bonding force (M2-O) to a first doping metal-oxygen bonding force (M1-O) is 1.1 to 2, and
wherein a ratio (M2/M1) of a content (at mol) of the second doping metal (M2) to a content (at mol) of the first doping metal (M1) is 0.03 to 15%.

7. The positive electrode active material for a sodium secondary battery according to claim 1,
wherein the sodium composite transition metal oxide is represented by the following Chemical Formula 1:
[Chemical Formula 1] NaₐM1_{b}[TMₓM2₁₋ₓ]O_{2+w}
wherein,
TM is Ni and at least one selected from Fe, Mn, and Co,
M1 is Ca,
M2 is at least one selected from W, V, Mo, and Nb, and
0.8≤a≤1.1, 0.005≤b≤0.02, 0.8≤x≤0.9998, 0.0001≤1-x≤0.002, and -0.1≤w≤0.1 are satisfied.

8. The positive electrode active material for a sodium secondary battery according to claim 1,
wherein the sodium composite transition metal oxide includes secondary particles in which a plurality of primary particles are aggregated, and
wherein the first doping metal and the second doping metal are positioned on a surface of the secondary particle, on a surface of the primary particle, and/or in an interior of the primary particle.

9. The positive electrode active material for a sodium secondary battery according to claim 1,
wherein the sodium composite transition metal oxide has an O3-type crystal structure.

10. A method of preparing the positive electrode active material for a sodium secondary battery according to claim 1, the method comprising:
dry mixing (a) a transition metal hydroxide precursor, a first doping metal compound, a second doping metal compound, and a sodium compound; and
calcining (b) the mixture.

11. The method of preparing a positive electrode active material for a sodium secondary battery according to claim 10,
wherein the dry mixing comprises:
mixing the sodium compound in an equivalent amount such that Na/M (all metals excluding Na) is greater than 0.8 and less than 1,
mixing the first doping metal in an amount of 0.5 to 2 at mol% based on a total amount of Na and the first doping metal, and
mixing the second doping metal in an amount of 0.01 to 0.2 at mol% based on a total amount of metals excluding Na and the first doping metal.

12. The method of preparing a positive electrode active material for a sodium secondary battery according to claim 10,
wherein the first doping metal compound is a compound of Ca selected from the group consisting of an acetate compound, a sulfide, a nitride, a phosphide, an oxide, an oxyhydroxide, a hydroxide, and a combination thereof, and
wherein the second doping metal compound is a compound of at least one selected from W, V, Mo, and Nb, selected from the group consisting of an acetate compound, a sulfide, a nitride, a phosphide, an oxide, an oxyhydroxide, a hydroxide, and a combination thereof.

13. The method of preparing a positive electrode active material for a sodium secondary battery according to claim 10,
wherein the calcining is performed at a temperature of 700 to 1,100°C for 5 to 40 hours.

14. A positive electrode for a sodium secondary battery, comprising the positive electrode active material according to claim 1.

15. A sodium secondary battery comprising:
the positive electrode according to claim 14;
a negative electrode; and
an electrolyte.
